# EUROPEAN PATENT SPECIFICATION

(11) **EP 2 863 782 B1**
(45) Date of publication and mention of the grant of the patent: **13.04.2022**
(21) Application number: 13806711.1
(22) Date of filing: 17.06.2013
(51) Int. Cl.: A47J 43/07, B26D 5/00, B26D 1/02, B26D 7/24, B26D 1/147, B26D 1/29, B26D 3/22, B26D 3/18, B26D 7/26

(54) **DEVICE FOR MUTUALLY POSITIONING TOOLS IN A CUTTING MACHINE FOR VEGETABLES**
VORRICHTUNG ZUR GEGENSEITIGEN POSITIONIERUNG VON WERKZEUGEN IN EINER SCHNEIDEMASCHINE FÜR GEMÜSE
DISPOSITIF POUR POSITIONNER ENTRE EUX DES OUTILS DANS UNE MACHINE À DÉCOUPER LES LÉGUMES

(30) Priority: 21.06.2012 SE 1250670
(43) Date of publication of application: 29.04.2015
(73) Proprietor: AB Hällde Maskiner, 164 26 Kista (SE)
(72) Inventor: ARTURSSON, Henrik, S-168 37 Bromma (SE); NYMAN, Thomas, S-192 54 Sollentuna (SE)
(74) Representative: Noréns Patentbyrå AB
(86) International application number: PCT/SE2013/050706
(87) International publication number: WO 2013/191625

(56) References cited:
- EP-A1- 0 116 017
- EP-A1- 2 382 902
- WO-A1-2009/112364
- CN-U- 201 675 790
- FR-A1- 2 891 129
- FR-A1- 2 959 154
- US-A- 4 095 751
- US-A1- 2008 301 952
- US-A1- 2010 154 659

## Description

The present invention relates to a device for mutually positioning tools in a cutting machine for vegetables.

A common type of cutting machine for cutting vegetables or root crops comprises a machine housing, wherein, in the upper part of the machine housing, there is one or several tools mounted around an axis which is driven by a motor arranged in the machine housing. The tools comprise different types of cutting discs. The upper part of the machine housing is designed as a circular trough, or the corresponding, running along the periphery of the cutting disc. The trough has a bottom out of which the said axis protrudes upwards. The through is arranged to collect cut vegetables. The trough is provided with a radially directed output channel for cut vegetables.

In order to dice vegetables or root crops, a dicing grid with a central hole is used, which central hole is placed around the said axis. A cutting disc is placed on said axis, above the dicing grid. The cutting disc is arranged to cut off slices of the vegetable in question and to press the slices down into and through the dicing grid. During operation, the dicing grid is still while the cutting disc rotates.

Known cutting machines of this type have a machine housing which is made from die-cast aluminum. In order to support and position the dicing grid, there is a protrusion in the circular wall of the trough, against which the peripheral part of the dicing grid is arranged to rest. The cutting disc is positioned by it being supported on the upper end of said axis. In order to achieve a good result, the distance between the dicing grid and the part of the cutting disc which is closest to the dicing grid should be 0.1 - 0.4 millimeters.

When the distance is too large, the vegetable will be crushed.

There is a desire to make the machine housing in stainless sheet metal with a thickness of about 1 - 2 millimeters. It is difficult to form stainless sheet metal so that for instance double-curved surface are achieved. This leads to different parts of the machine housing being assembled from plane and bent pieces of sheet metal, which are joined together by among other techniques welding. When pieces of stainless sheet metal are welded one to the other, thermal tensions arise in the pieces, resulting in the pieces tending to deform. This, in turn, results in that it has proven very difficult to achieve the precision regarding the measurements of the machine housing which is common for a die-cast machine housing. In particular, it has turned out that it is very difficult to make a step in the trough, as described above, for supporting a dicing grid so that this has the correct distance to the cutting disc. In the corresponding way, it is very difficult to make the machine housing so that other tools can be supported by the machine housing with sufficient precision in relation to for instance a cutting disc.

The present invention solves this problem and makes it possible for the machine housing to be made from stainless sheet metal with somewhat less precision regarding the measurements of the machine housing.

EP 0116017 shows a cutting machine having two tools spaced apart by means of a relatively complicated mechanical arrangement

Hence, the present invention relates to a device for mutually positioning tools in a cutting machine for vegetables, which cutting machine comprises a machine housing, wherein in the upper part of the machine housing cutting tools are arranged to be mounted around an axis which is driven by a motor arranged in the machine housing, wherein the upper part of the machine housing is shaped as a trough, running along the periphery of the cutting tool, which trough has a bottom out from which the said axis protrudes upwards and which trough is arranged to collect cut vegetables and which trough is provided with a radially directed output channel for cut vegetables. Two or more cooperating tool parts are provided, in that each tool part is supported directly or indirectly by one of two or several steps, arranged at a distance from each other and formed on one and the same machine element. A dicing grid is supported on a lower one of said steps and a cutting disc is supported on an upper one of said steps.

Below, the present invention is described in closer detail, partly in connection to embodiments shown in the appended drawings, in which
- figure 1 shows a cross-section from the side of the upper part of a cutting machine for vegetables
- figure 2 shows a top view of the machine in figure 1
- figure 3 shows a section view of the part of the machine according to figure 1 and according to a first embodiment
- figure 4 shows a section view of a part of the machine according to figure 1 and according to a second embodiment
- figure 5 shows a dicing grid.

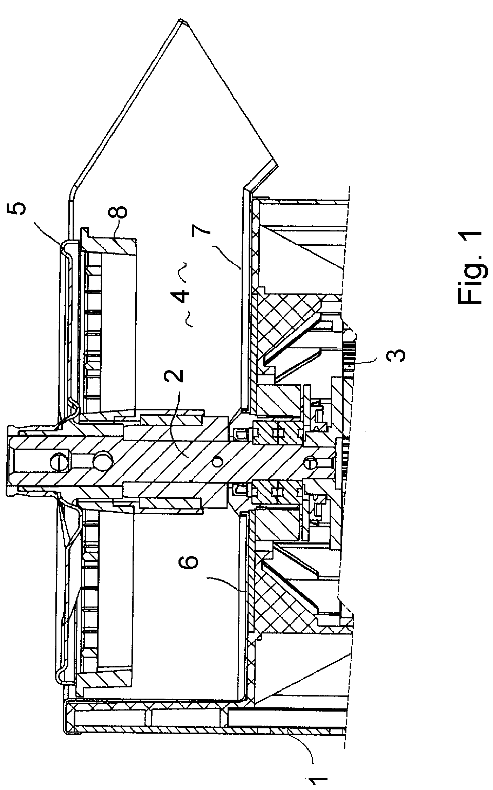

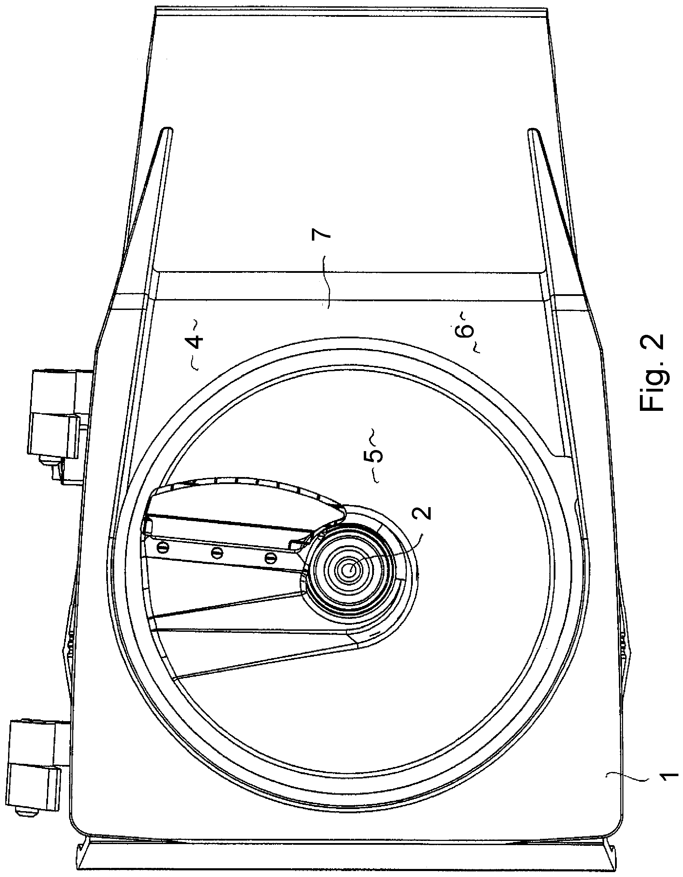

In figures 1 and 2, an upper part of a cutting machine for vegetables is shown. The cutting machine comprises a machine housing 1. In the upper part of the machine housing, cutting tools are arranged to be mounted around an axis 2 which is driven by a motor 3 arranged in the machine housing. The upper part of the machine housing 1 is shaped as a trough 4, running along the periphery of the cutting tool 5, which trough 4 has a bottom 6 out from which the said axis 2 protrudes upwards. The trough 4 is arranged to collect cut vegetables and is provided with a radially directed output channel 7 for cut vegetables.

According to the invention, there are provided two or more cooperating tool parts, where each tool part is supported directly or indirectly by one of two or several steps, arranged at a distance from each other and formed on one and the same machine element.

In figure 1, the tool parts are illustrated with a dicing grid 8 and a cutting disc 5 arranged on top of, but at a small distance from, the dicing grid 8.

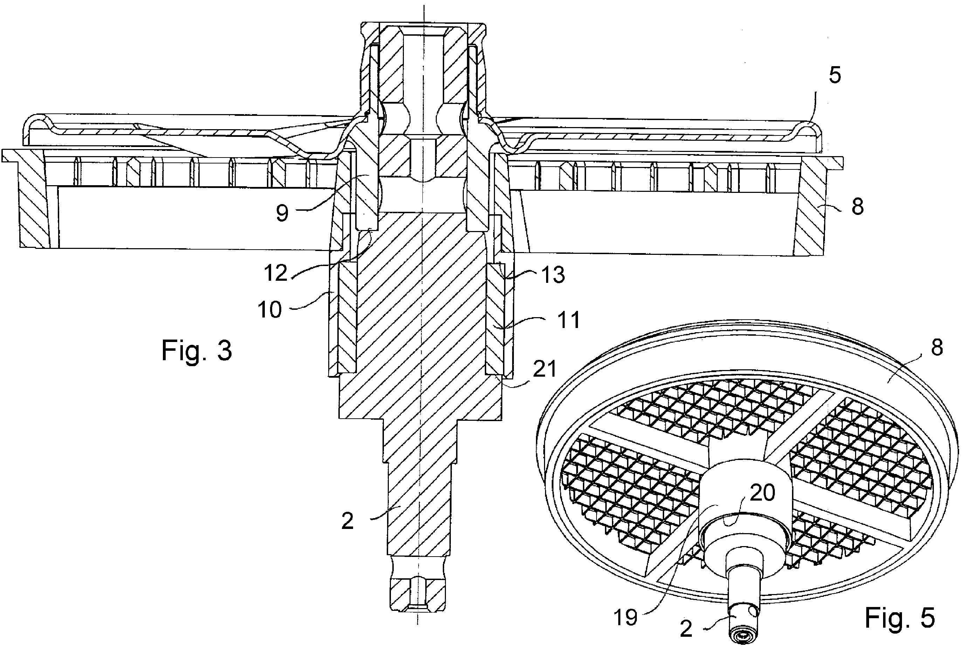

In figure 5, a conventional dicing grid 8 is shown in a perspective view from below.

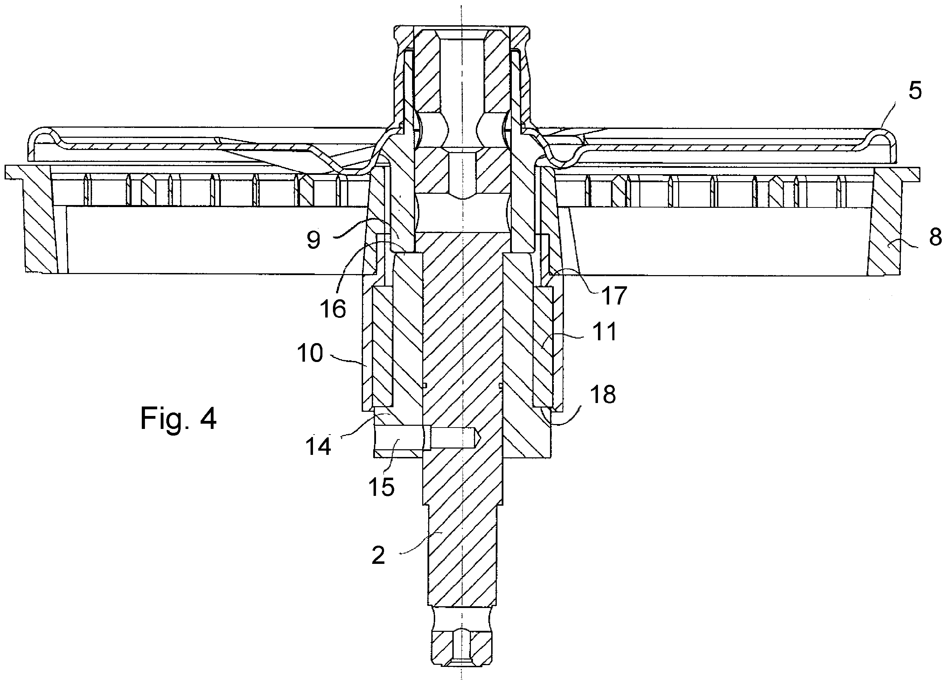

In figures 3 and 4, among other things the dicing grid 8, the cutting disc 5 and the axis 2 are shown.

Above was mentioned that each tool part 5, 8 is supported directly or indirectly by one of two or several steps, arranged at a distance from each other and formed on one and the same machine element.

According to a first preferred embodiment, the machine element is the said axis 2. This embodiment is shown in figure 3. The reference number 9 denotes a cylindrical, central, tube-shaped part of the cutting disc 5. The reference numeral 10 denotes a central, tube-shaped part of the dicing grid 8. The reference number 11 denotes a bearing belonging to the dicing grid 8. During operation, the dicing grid is still while the cutting disc rotates.

In this embodiment, the tube-shaped part 9 of the cutting disc 5 rests against a first step 12, formed in the axis 2. The bearing 11 of the tube-shaped part 10 of the dicing grid 8 rests against a second step 21, formed in the axis 2. According to this embodiment, the two tool parts are thus supported directly on two steps which are arranged at a distance from each other. The first 12 and the second 21 steps have a mutual distance such that a desired distance is achieved between the two tool parts, the dicing grid and the cutting disc. Since the two steps are formed in one and the same machine element, that is the axis 2, the axis 2 can be machined so that the distance between the steps has a very high precision. Suitably, the axis 2 is made from a stainless steel. The lower part of the axis 2 is connected to an electric motor, not shown, in the machine housing.

By this embodiment, it is achieved that the precision in the distance between the dicing grid and the cutting disc is always high, even if the machine housing is made from stainless sheet metal which has been deformed due to heat induced tensions in the material.

In case the bearing 11 is not rotationally fixed to the dicing grid 8, hence the tube-shaped part 10 of the dicing grid 8 rests against the upper surface 13 of the bearing 11, where the bearing 11 in turn rests against the said second step 21, in other words the dicing grid is indirectly supported by the said second step 21. The bearing 11 may be a ball bearing. The bearing may also be a loose sleeve which does not belong to the dicing grid 8.

According to a second preferred embodiment, the said machine element is a sleeve 14 surrounding the said axis 2, see figure 4. The sleeve 14 is fastened to the axis 2 using a jointing 15. According to this embodiment, the sleeve 14 comprises the said steps.

In this embodiment, the tube-shaped part 9 of the cutting disc 5 rests against a first step 16, comprised by the upper surface 16 of the sleeve 14. The tube-shaped part 10 of the dicing grid 8 rests against a second step 18 formed in the sleeve 14. These steps 16, 18 have a mutual distance such that a desired distance between the two tool parts, the dicing grid and the cutting disc, is achieved.

In case the bearing 11 is not rotationally fixed to the dicing grid 8, the tube-shaped part 10 of the dicing grid 8 thus rests on the upper surface 17 of the bearing 11, where the bearing 11 in turn rests on the said second step 18, in other words the dicing grid is indirectly supported by the said second step 18.

In both the first and the second preferred embodiments, the dicing grid is supported by the lower of said steps and the cutting disc by the upper of said steps.

According to a very preferred embodiment, the distance between the steps is such that the distance between the dicing grid and the part of the cutting disc located closest to the dicing grid is 0.1 - 0.4 millimeters.

According to a preferred embodiment, the said bearing 11 is a ceramic sleeve 20, located inside the tube-shaped part 19 of the dicing grid.

According to an alternative embodiment, the said bearing 11 is coated with a ceramic layer, so that at least the surface of the bearing which is arranged to abut against the lower one 18, 21 of the said steps is coated with a ceramic layer.

Above, a number of exemplifying embodiments have been described. However, it is apparent that the invention can be varied as regards the detailed design of the various elements.

Therefore, the present invention is not to be considered limited to the above described embodiments, but may be varied within the scope of the enclosed claims.

## Claims

1. Device for mutually positioning tools in a cutting machine for vegetables, which cutting machine comprises a machine housing (1), wherein in the upper part of the machine housing cutting tools (5) are arranged to be mounted around an axis (2) which is driven by a motor (3) arranged in the machine housing, wherein the upper part of the machine housing is shaped as a trough (4), running along the periphery of the cutting tool (5), which trough (4) has a bottom (6) out from which the said axis (2) protrudes upwards and which trough is arranged to collect cut vegetables, wherein two or more cooperating tool parts (5,8) are provided, each tool part being supported directly or indirectly by one of two or several steps (16,18;12,21), arranged at a distance from each other and formed on one and the same machine element (2;14), **characterised in that** a dicing grid (8) is supported on a lower one of said steps (18;21), and **in that** a cutting disc is supported on an upper one of said steps (12;16) Z and **in that** the trough (4) is provided with a radially directed output channel (7) for cut vegetables.

2. Device according to claim 1, **characterised in that** the machine element (2) is the said axis.

3. Device according to claim 1, **characterised in that** the machine element is a sleeve (14) surrounding the said axis (2).

4. Device according to claim 1, **characterised in that** the distance between the steps (16,18;12,21) is such that the distance between the dicing grid (8) and the part of the cutting disc (5) located closest to the dicing grid is 0.1 - 0.4 millimeters.

## Patentansprüche

1. Vorrichtung zum wechselseitigen Positionieren von Werkzeugen in einer Schneidemaschine für Gemüse, wobei die Schneidemaschine ein Maschinengehäuse (1) aufweist, wobei in dem oberen Teil des Maschinengehäuses Schneidewerkzeuge (5) zur Montage um eine Achse (2) angeordnet sind, welche von einem Motor (3) angetrieben ist, der in dem Maschinengehäuse als ein Trog (4) angeordnet ist, wobei der Trog (4) entlang des Umfangs des Schneidewerkzeugs (5) angeordnet ist, wobei der Trog (4) einen Boden (6) hat, von dem aus die genannte Achse (2) nach oben ragt, und wobei der Trog angeordnet ist, um das geschnittene Gemüse einzusammeln, wobei zwei oder mehr kooperierende Werkzeugteile (5, 8) vorgesehen sind, wobei jeder Teil von einer von zwei Stufen (16, 18; 12, 21) direkt oder indirekt gestützt ist, die zueinander beabstandet und an ein und demselben Maschinenelement (2;14) gebildet sind, **dadurch gekennzeichnet, dass** ein Vereinzelungsgitter (8) auf einer unteren der Stufen (18; 21) abgestützt ist und dass eine Schneidescheibe (12;16) auf einer oberen der Stufen (12;16) abgestützt ist und dass der Trog (4) mit einem radial ausgerichteten Ausgangskanal (7) für geschnittenes Gemüse versehen ist.

2. Vorrichtung nach Anspruch 1, **dadurch gekennzeichnet, dass** das Maschinenelement (2) die genannte Achse ist.

3. Vorrichtung nach Anspruch 1, **dadurch gekennzeichnet, dass** das Maschinenelement eine Hülse (14) ist, die die genannte Achse (2) umgibt.

4. Vorrichtung nach Anspruch 1, **dadurch gekennzeichnet, dass** der Abstand zwischen den Stufen (16, 18; 12, 21) derart ausgebildet ist, dass der Abstand zwischen dem Vereinzelungsgitter (8) und dem Teil der Schneidescheibe (5) welcher am engsten an dem Vereinzelungsgitter angeordnet ist, 0,1 - 0,4 mm beträgt.

## Revendications

1. Dispositif pour positionner mutuellement des outils dans une machine à découper les légumes, laquelle machine à découper comprend un boîtier de machine (1), dans lequel dans la partie supérieure du boîtier de machine, on agence des outils de coupe (5) destinés à être montés autour d'un axe (2) qui est entraîné par un moteur (3) agencé dans le boîtier de machine, dans lequel la partie supérieure du boîtier de machine est formée comme une partie creuse (4), s'étendant le long de la périphérie de l'outil de coupe (5), laquelle partie creuse (4) a un fond (6) duquel ledit axe (2) fait saillie vers le haut et est agencé pour collecter les légumes coupés, dans lequel :
deux parties d'outil coopérantes (5, 8) ou plus sont prévues, chaque partie d'outil étant supportée directement ou indirectement par l'un de deux gradins ou de plusieurs gradins (16, 18 ; 12, 21) agencés à une certaine distance l'un de l'autre et formés sur un seul et même élément de machine (2 ; 14), **caractérisé en ce qu'**une grille de découpage en cubes (8) est supportée sur un gradin inférieur desdits gradins (18 ; 21), et **en ce qu'**un disque de coupe est supporté sur un gradin supérieur desdits gradins (12 ; 16) et **en ce que** la partie creuse (4) est prévue avec un canal de sortie dirigé radialement (7) pour les légumes coupés.

2. Dispositif selon la revendication 1, **caractérisé en ce que** l'élément de machine (2) est ledit axe.

3. Dispositif selon la revendication 1, **caractérisé en ce que** l'élément de machine est un manchon (14) entourant ledit axe (2).

4. Dispositif selon la revendication 1, **caractérisé en ce que** la distance entre les gradins (16, 18 ; 12, 21) est telle que la distance entre la grille de découpage en cubes (8) et la partie du disque de coupe (5) la plus proche de la grille de découpage en cubes est de 0,1 à 0,4 millimètres.
